# EUROPEAN PATENT SPECIFICATION

(11) **EP 1 343 344 B1**
(45) Date of publication and mention of the grant of the patent: **06.04.2011**
(21) Application number: 02751663.2
(22) Date of filing: 24.07.2002
(51) Int. Cl.: H04L 29/08, H04W 80/06

(54) **COMMUNICATION SYSTEM FOR ADDING DATA TRANSMISSION ORIGIN INFORMATION TO DATA**
DATENKOMMUNIKATIONSSYSTEM MIT ZUSäTZLICHER DATEN-URSPRUNGSINFORMATION
SYSTEME DE COMMUNICATION PERMETTANT D'AJOUTER A DES DONNEES DES INFORMATIONS RELATIVES A L'ORIGINE DE TRANSMISSION DE DONNEES

(30) Priority: 24.07.2001 JP 2001223425; 29.03.2002 JP 2002097319
(43) Date of publication of application: 10.09.2003
(73) Proprietor: NTT DOCOMO, INC., Chiyoda-ku Tokyo 100-6150 (JP)
(72) Inventor: SUMINO, Hiromitsu, Chiyoda-ku, Tokyo 100-6150 (JP); SUZUKI, Hideharu, Chiyoda-ku, Tokyo 100-6150 (JP)
(74) Representative: HOFFMANN EITLE
(86) International application number: PCT/JP2002/007478
(87) International publication number: WO 2003/010991

(56) References cited:
- EP-A- 0 903 906
- WO-A-99/56431
- WO-A2-99/56431
- JP-A- 10 509 006
- JP-A- 2002 169 734

## Description

### Technical Field

The present invention relates to a communication system, data relay apparatus, data relay method, program, and storage medium which provide means for adding data source information relating to a mobile station, to transmitted data.

### Background Art

In EP 0 903 906 A2, there is described a scheme for adaptive control of transport layer connection in communications via radio and wire networks. There is enabled a control of the transport layer connection according to the radio communication state and property of the radio terminal, without changing implementation of the transport layer of a terminal connected to a wire network. A gateway device is provided with a control unit for controlling a connection in the radio transport layer protocol according to an information regarding a radio communication state of the radio terminal device, where the information regarding the radio communication state of the radio terminal device is notified from either a radio base station device covering a radio service area in which the radio terminal device is located or a home location register for carrying out at least registration and management of the radio terminal device.

In WO 99/56431 A, there is described a communication terminal initiating a wireless session protocol session by forwarding a request of data to a server. The request comprises an identification of the requested data and a communication terminal identification number provided by the server. The server, when receiving a request containing a communication terminal identification number, recalls user profile information from an associated database memory corresponding to the communication terminal identification number. The user profile information indicates a data format which will be handled by the communication terminal. Then the server replies to the request by forwarding the requested data in the format defined by the user profile information.

A further prior art mobile station has a function of adding data (hereinafter referred to as mobile station data) relating to the mobile station, such as location information, to data transmitted from the mobile station to another communication apparatus (hereinafter referred to as user data). If mobile station data are added to user data, the communication apparatus, which receives user data, is able to respond on the basis of data of the mobile station by using mobile station data added to user data.

Another prior art mobile station has a function of performing data communication conforming to a communication protocol using text data such as Hypertext Transfer Protocol (HTTP) with other communication apparatus. Such a mobile station is more convenient to use, since it is able easily to establish data compatibility with a communication apparatus. This is in contrast with mobile stations which use binary data to perform data communication with other communication apparatus.

### Disclosure of Invention

As mentioned above, a mobile station of the prior art, which has a function of adding mobile station data to user data, is convenient to use since the mobile station is able to receive a response on the basis of the data of the mobile station. However, in a case of using a mobile station of the prior art which has a function of adding mobile station data, a problem exists that mobile station data may be falsified by a user of the mobile station. This possibility exists because mobile station data are added at the mobile station. Thus, a problem exists that an apparatus may receive user data to which unreliable mobile station data is added. This is a significant problem in services which use data (hereinafter referred to as the identification data) for identifying a mobile station on the basis of mobile station data. Furthermore, if user data is in text format conforming to HTTP or the like, although such a format is more convenient to use, it is also easier for a user to falsify user data than is the case with binary data. The problem of reliability of mobile station data will now be described using an example of a mail-order service.

First, a user of a mobile station starts a browser program, which is provided in the mobile station, and uses HTTP to browse site information. The user then opens a site either of a mail-order company in the communication network to which the mobile station belongs, or a site of a mail-order company in a communication network connected to that to which the mobile station belongs. In making a purchase, the user inputs in an order form on the site an order number, purchase amount, delivery address, and desired delivery time for the purchase. The user then performs an "execute" operation as a result of which the browser program creates user data, which consists of input information to which the telephone number of the mobile station is added. User data is in Hypertext makeup language (HTML).

Ordinarily, the browser program transmits the user data to the server of the mail-order company as soon as the browser program creates user data to which the telephone number of the mobile station is added. The server of the mail-order company, which received the product order with the user data received by the server, arranges for delivery of the ordered products. Simultaneously, the server of the mail-order company transmits a collection request to the server of a carrier, which provides mobile communication services to the mobile station, to charge for the product. The telephone number of the mobile station is added to the user data. When the server of the carrier receives the collection request, it adds the amount charged to the communication fee of the communication services of the mobile station and calculates a total charge payable by the user of the mobile station. As a result, the purchased products are charged to the user of the mobile station along with a communication fee at a later date. This product charge is balanced between the carrier and the mail-order company.

However, such a system is open to abuse. Namely, a user of the mobile station may order products from a mail-order service using false information. One such way in which a user may do this is as follows: First, the user of the mobile station suspends operation of the browser program by means of modification of the browser program in advance, just before user data to which the telephone number of the mobile station is added is transmitted to the server of the mail-order company. Then, the user of the mobile station starts a text editor program and rewrites the telephone number of the mobile station to a different number. The user then resumes operation of the browser program, and the browser program transmits the edited user data to the server of the mail-order company. When the server of the mail-order company receives the edited user data, the server of the mail-order company processes the collection of the product charge with the carrier. However, the product charge is debited incorrectly because the telephone number has been edited.

As mentioned above, in a data communication system of the prior art, available services are restricted due to a lack of reliability of mobile station data. In contrast, the present invention provides a communication system, data relay apparatus, data relay method, program, and storage medium having means capable of adding information related to a mobile station, which is a data source, to transmitted data.

More specifically, the present invention provides a communication system having the features of claim 1.

Additionally the present invention provides a data relay apparatus which comprises the features of claim 2.

In preferred embodiment, claim 3, data processed by the data relay apparatus is a telephone number of a connecting mobile station.

In another preferred embodiment, claim 4, the data relay apparatus in the present invention further comprises a receiving means for allocating au ZP address to said identification data used to identify a mobile station when it connects to the communication apparatus, wherein the extraction means extracts a set of mobile station data corresponding to the connecting mobile station in accordance with its identification data.

In another preferred embodiment, claim 5, the data relay apparatus of the present invention further comprises a determining means for determining whether user data received by the receiving means is data to which a specific kind of data corresponding to the mobile station is added, wherein only in the case that the determining means determines that the user data received by the receiving means is not data to which the specific kind of data corresponding to the mobile station is added, the transmitting means transmits user data to which all or a part of a set of mobile station data is added by the adding means.

In another preferred embodiment, claim 6, the data relay apparatus of the present invention further comprises a determining means for determining whether user data received by the receiving means is data to which a specific kind of data corresponding to the mobile station is added, wherein in the case that the determining means determines that the user data received by the receiving means is data to which the specific kind of data corresponding to the mobile station is added, a disconnecting means disconnects the communication connection which the transmitting means establishes with the communication apparatus to transmit user data.

In another embodiment, claim 7, the data relay apparatus in the present invention comprises a determining means for determining whether user data received by the receiving means is data to which a specific kind of data corresponding to the mobile station is added, and in the case that the determining means determines that the user data received by the receiving means is data to which the specific kind of data corresponding to the mobile station is added, a deleting means in the data relay apparatus deletes the pre-added specific kind of data.

In another preferred embodiment, claim 8, the data apparatus of the present invention further comprises a determining means for determining whether user data received by the user data receiving means satisfy a predetermined condition, wherein only in the case that the determining means determines that the user data received by the user data receiving means does satisfy a predetermined condition, the adding means adds all or a part of the set of mobile station data.

In another preferred embodiment, claim 9, the set of mobile station data extracted by the extracting means, which the data relay apparatus in the present invention processes, includes data corresponding to at least one of a telephone number, IP address, model, location, line speed, delay of data transmission, and intensity in electric field of radio wave of the mobile station, or to personal information of the user.

In another preferred embodiment, claim 10, user data which the data relay apparatus processes is in a format conforming to HTTP, wherein the adding means adds all or a part of a set of mobile station data to the user data as an extension header.

Additionally, the present invention provides a data relay method which comprises the features of claim 11.

The present invention also provides a computer program having the features of claim 12 and a storage medium having the features of claim 13.

### Brief Description of Drawing

FIG. 1 shows an overall configuration of a communications system according to one embodiment of the present invention.
FIG. 2 is a block diagram illustrating schematically a configuration of the gateway according to one embodiment of the present invention.
FIG. 3 is a conceptual diagram showing a data format transmitted and received between a mobile station, a gateway, and a server according to one embodiment of the present invention.
FIG. 4 is a conceptual diagram showing data in a mobile station database according to one embodiment of the present invention.
FIG. 5 is a flowchart illustrating an adding operation of mobile station data according to one embodiment of the present invention.
FIG. 6 is a diagram illustrating addition of mobile station data to data transmitted and received among a mobile station, a gateway, and a server.

### BEST MODE FOR CARRYING OUT THE INVENTION

### A: Detailed Description of embodiments

### (1) Structure of data communication system

Herein below, an embodiment of the present invention will be explained with reference to the drawings.

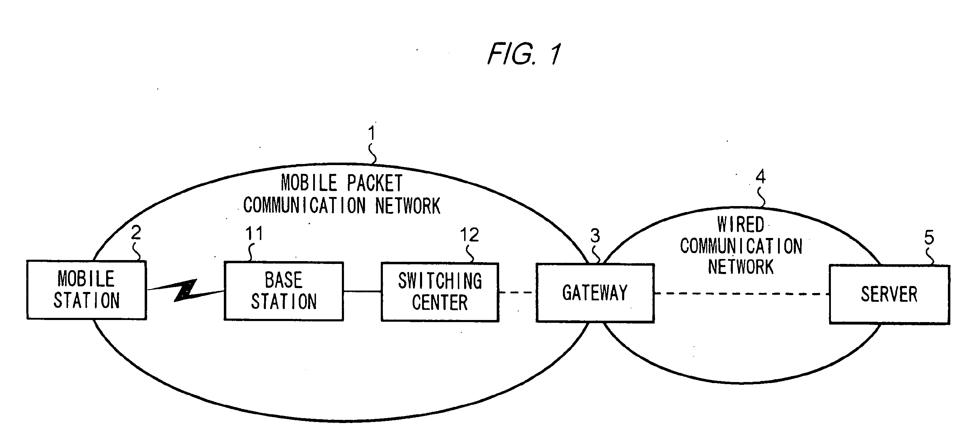

FIG. 1 shows an overall configuration of a communication system according to one embodiment of the present invention.

Mobile packet communication network 1 provides a packet communication service to mobile station 2. The mobile packet communication network 1 comprises a plurality of mobile stations 2, a plurality of base stations 11, and a plurality of switching centers 12. To simplify illustration of the network, only one instance of each entity is shown in the figure.

Mobile station 2 is a terminal device which a user of the mobile packet network 1 uses for transmitting and receiving data in packets with another communication apparatus. Mobile station 2 establishes a wireless communication connection with base station 11, which has the strongest radio wave intensity, and performs packet communication with another communication apparatus via base station 11 using the established communication connection.

Base station 11 outputs a carrier wave for communicating with mobile station 2, and forms a wireless cell which corresponds to a reachable range of the carrier wave. Base station 11 establishes a wireless communication connection with mobile station 2, which is present in a wireless cell served by base station 11. Base station 11 has a wired connection with switching center 12, and maintains a constant connection with switching center 12. Base station 11 relays data transmitted and received between mobile station 2 and switching center 12 at a time when mobile station 2 performs packet communication with another communication apparatus.

Switching center 12 is connected by wire to another switching center via gateway mobile switching center (not shown in the Figures). When mobile station 2 performs packet communication with another communication apparatus, switching center 12 relays data transmitted and received between mobile station 2 and the other communication apparatus via base station 11 after establishing a communication route between mobile station 2 and the other communication apparatus in cooperation with other switching centers.

Gateway 3 is simultaneously connected to a gateway mobile switching center on the side of mobile packet communication network 1 and wired communication network 4. Gateway 3 relays data transmitted and received between mobile packet network 1 and wired communication network 4, and converts any data differing in format as a result of differences in protocols used to communicate of mobile packet communication network 1 and wired communication network 4. It is to be noted here that HTTP is available as a common communication protocol in both mobile packet communication network 1 and wired communication network 4.

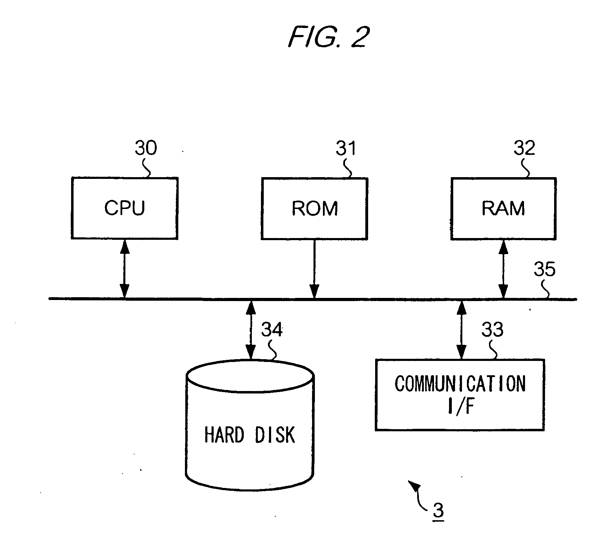

Fig. 2 is a block diagram illustrating a configuration of gateway 3. Gateway 3 comprises Central Processing Unit (CPU) 30, Read Only Memory (ROM) 31, Random Access Memory (RAM) 32, communication interface (communication I/F) 33, hard disk 34, and system bus 35.

CPU 30, which is a microprocessor for controlling each comprisal of gateway 3, reads control program from a nonvolatile memory ROM 31, and processes the program. ROM 31 stores control program; and a volatile memory RAM 32 functions as a work area for CPU 30. Communication I/F 33 has two input/output ports, with one of the two input/output ports being connected to mobile packet communication network 1, and the other being connected, by wire, to wired communication network 4. Communication I/F 33 receives digital data via an electric signal from each communication network and transmits data to CPU 30, and also transmits via an electric signal digital data transmitted by CPU 30 to each communication network. Hard disk 34, which is a large capacity nonvolatile storage device, stores a database recording mobile station data of each mobile station 2 and a program causing the computer to execute a function of adding mobile station data to data transmitted from mobile station 2 to server 5. The operation carried out by the program will be described later. System bus 35 is a signal transmission path of a signal used when each comprisal of gateway 3 transmits and receives data.

Wired communication network 4 is wide area network connecting a plurality of networks, and comprises gateway 3, server 5, and a variable number of other communication apparatus not shown in the figures. In wired communication network 4, each communication apparatus utilizes either a dedicated line or encryption to prevent any leakage of data. Server 5 functions to provide and collect information by transmitting and receiving text data to and from other communication apparatus via wired communication network 4.

### (2) Outline of transmitted data

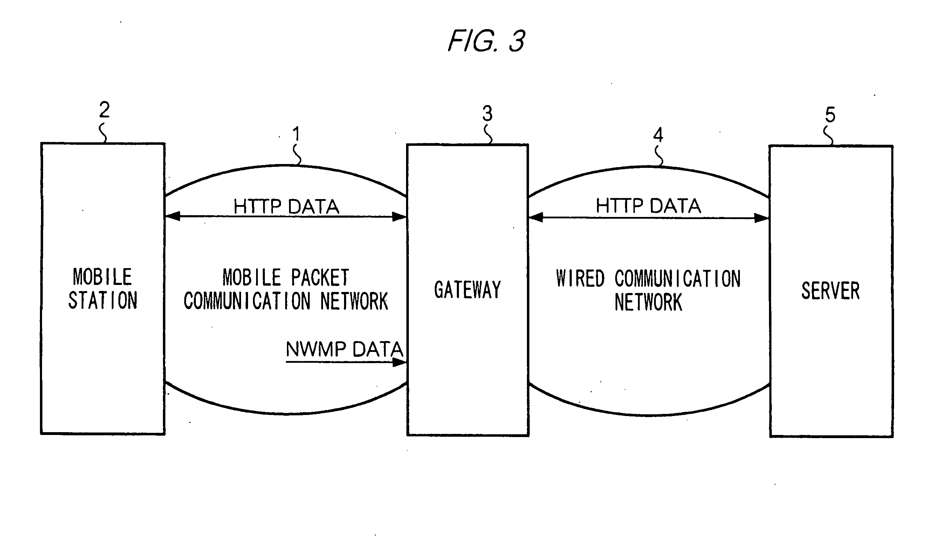

Fig. 3 is a conceptual illustration of data format transmitted and received among mobile station, gateway, and server, according to one embodiment of the present invention.

Between switching center 12 and gateway 3 included in mobile packet communication network 1, all variety of kinds of data (hereinafter referred to as NWMP data) for administering each mobile station 2 is transmitted and received in packet form conforming to a communication protocol of an upper layer referred to as Network Management Protocol (NWMP) with using User Datagram Protocol (UDP). Between mobile station 2 and gateway 3, and between gateway 3 and server 5, HTTP data is transmitted and received by using Transmission Control Protocol (TCP). Descriptions are follows.

First, when a wireless communication connection is established between mobile station 2 and base station 11, base station 11 transmits a telephone number used as an identification number of mobile station 2 in establishing wireless communication connection.

When switching center 12 receives the telephone number of mobile station 2 from base station 11, switching center 12 allocates an IP address. A plurality of switching centers 12 cooperate each other to administer an IP address, which is allocated to a communication apparatus such as a switching center in mobile packet communication network 1, and an IP address allocated to each mobile station. Apart from these allocated IP addresses, no other IP address is used in the mobile packet communication network.

Furthermore, switching center 12 compiles and administers a variety kinds of information of each mobile station 2 in the wireless cell of base station, such as line speed or an amount of transmitted data, with identification number (hereinafter referred as ID) of base station 11.

It is to be noted here that since the telephone number of mobile station 2 administered by switching center 12 functions as identification data when mobile station 2 connects to mobile packet communication network 1, it is not possible for a user of mobile station 2 to falsify the telephone number. Further, since the IP address allocated to mobile station 2 is an IP address allocated to the telephone number, and mobile station 2 is not able to use any other IP address, the user of mobile station 2 can not transmit HTTP data separate from the IP address allocated to the telephone number. Furthermore, since a line speed or amount of transmitted data of each mobile station are compiled at switching center 12, it is not possible for use of NWMP to originate at mobile station 2, and it is therefore not possible for a user of mobile station 2 to falsify NWMP data.

When mobile station 2 performs communication with server 5 after connecting to mobile packet communication network 1, a communication connection (hereinafter referred to as TCP connection) is established by using TCP between mobile station 2 and gateway 3; then, a TCP connection is established between gateway 3 and server 5. Gateway 3 relays data in the TCP connection and communication route by using the TCP connection established between mobile station 2 and server 5 via gateway 3. By using this communication route, mobile station 2 can transmit and receive HTTP data with server 5.

Gateway 3 transmits a request for mobile station data corresponding to mobile station 2 to switching server 12 by using NWMP when gateway 3 relays data in the TCP connection established between mobile station 2 and server 5. Simultaneously, gateway 3 transmits the IP address of mobile station 2, obtained in establishing connection to mobile station 2, to switching center 12. When switching center 12 receives the IP address of mobile station 2 with mobile station data of mobile station 12, switching center 12 reads data corresponding to the IP address received from NWMP data of each administered mobile station 2 and transmits the read data as mobile station data to gateway 3 by using NWMP. Gateway 3 stores mobile station data, obtained as described above, in a mobile station database in hard disk 34.

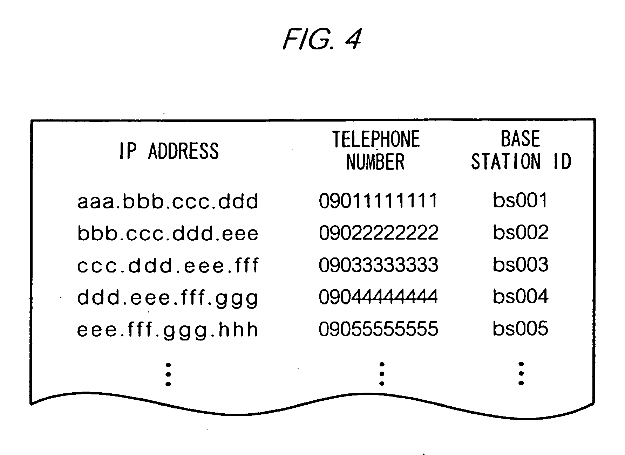

In Fig. 4, which shows examples of data stored in a mobile station database, for simplicity only an IP address and telephone number of each mobile station 2, and an ID of base station 11 with which each mobile station 2 establishes a connection, is shown.

Data in mobile station database administered by gateway 3 are obtained from switching center 12, and high reliability of data in switching server 12 is maintained in mobile station database of gateway 3.

### (3) Storage and addition of mobile station data

Next is described an operation of gateway 3 in receiving mobile station data from switching center 12, and adding mobile station data to user data when the user data is transmitted from mobile station 2 to server 5.

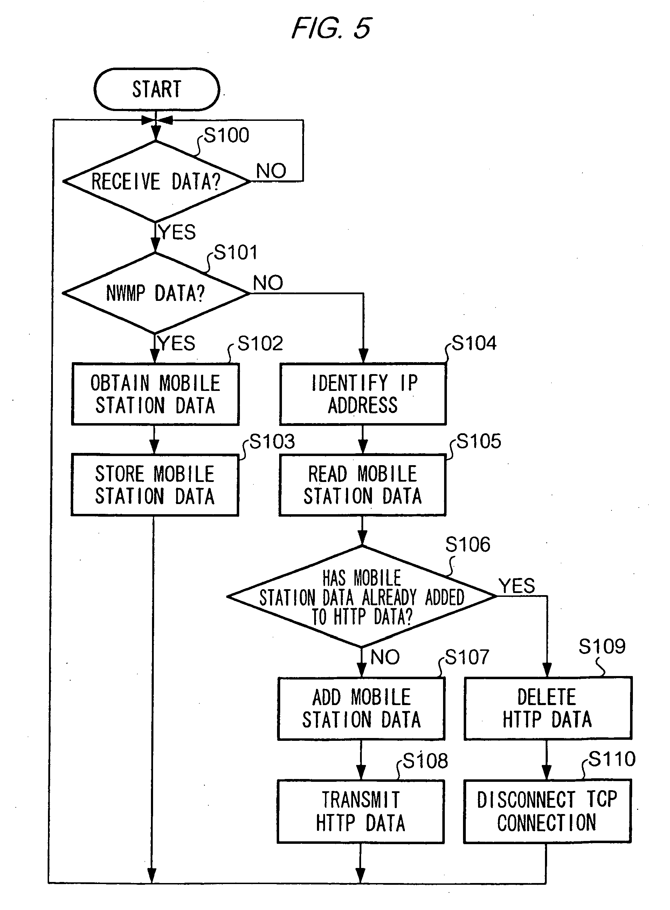

Fig. 5 is a flowchart illustrating an operation executed by CPU 30 in accordance with an adding program stored at hard disk 34 in gateway 3.

First, CPU 30 receives data from mobile station 2 via communication I/F 33 (step S100; YES). The received data is either NWMP data transmitted from switching center 12 in response to a request of gateway 3, or HTTP data transmitted from mobile station 2 to server 5. CPU 30 determines whether the received data is NWMP data (step S101). In step S101, if the received data is determined to be NWMP data (step S101; YES), CPU 30 obtains mobile station data, namely an IP address and telephone number of mobile station 2, and an ID of base station 11 connecting to mobile station 2 (step S102). Then CPU 30 stores the obtained mobile station data in mobile station database (step S103).

On the other hand, in step S101, if the received data is determined to be not NWMP data but HTTP data, CPU 30 obtains an IP address from received HTTP data (step S104) and reads mobile station data related to the IP address and stored in database (step S105). Next, CPU 30 determines whether mobile station data is added as an expansion header to HTTP data. If the mobile station data is determined not to be added to HTTP data as an expansion header (step S106; NO), CPU 30 adds mobile station data, read from database, to HTTP data as an expansion header (step S107). Next, CPU 30 transmits the HTTP data to which mobile station data is added, to server 5 (step S108).

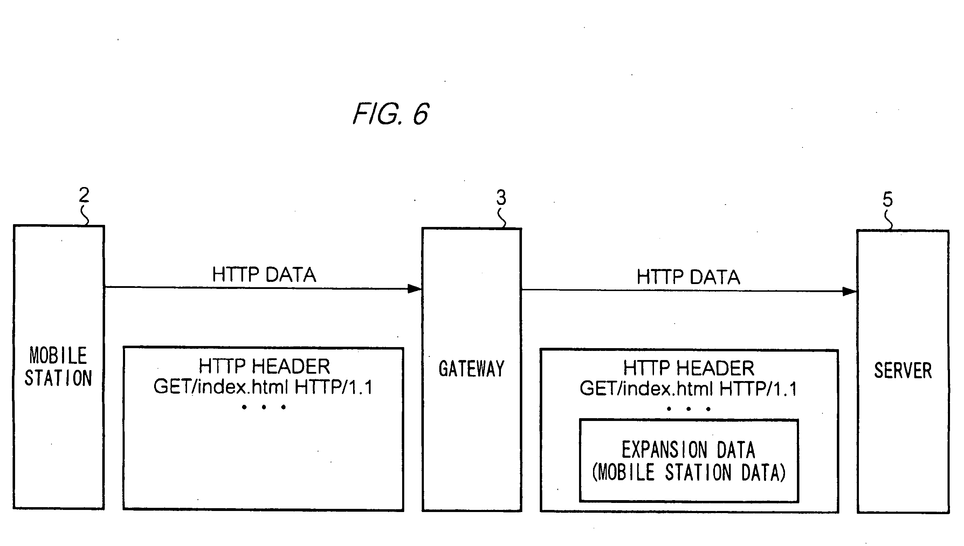

Fig. 6 illustrates conceptually addition of mobile station data to HTTP data transmitted from mobile station 2 to server 5. As shown in Fig. 6, the mobile data is added at gateway 3 as an expansion header in accordance with HTTP, and no protocol modification for communication of HTTP data in wired communication network 4 is necessary. If server 5, receiver side of HTTP data, does not require mobile station data, the added expansion data is ignored and no operation modification in server 5 is necessary.

If mobile station data is determined to have been added as an expansion header to HTTP data (step S106; YES), mobile station data, which should be added at gateway 3 originally, is supposed to be added falsely at mobile station 2 or at some midpoint in data communication between mobile station 2 and gateway 3, and CPU 30 deletes the HTTP data (step S109). Next, CPU 30 disconnects the TCP connection (step S110) because the TCP connection established between mobile station 2 and gateway 3 is determined at that time to be insecure.

By the operation described above, it is not possible for unreliable HTTP data to be transmitted to server 5, thereby enabling transmission of highly reliable mobile station data to server 5.

### (4) Effect of the embodiment

As described in the embodiment above, a telephone number of mobile station 2 functions as identification data when connecting to mobile packet communication network, with an IP address of Mobile Station 2 being used in conjunction with this identification data for transmission to gateway 3. Accordingly, when mobile station 2 transmits HTTP data to server 5 mobile station data corresponding to the identification data of mobile station 2 is added to HTTP data at gateway 3, and as a consequence, mobile station data of mobile station 2 added to the HTTP data and received at server 5 is secure. In contrast, if mobile station data, which should be added at gateway 3, has been added to HTTP data before arriving at gateway 3, gateway 3 deletes such HTTP data as unreliable data, and disconnects the TCP connection with mobile station 2. It is therefore not possible for any HTTP data which includes unreliable mobile station data to be transmitted to server 5, and mobile station data of mobile station 2 added to HTTP data received by server 5, is highly reliable. Furthermore, since mobile station data of mobile station 2 is added to HTTP data as an expansion header of HTTP, it is not necessary to modify a protocol used in either mobile packet communication network 1 or wired communication network 4. Thus, in this embodiment of the present invention, migration from a conventional data communication system to a data communication system can be easily carried out.

### B: Modifications

It is to be understood that the data system of the present invention is not restricted to the embodiment described above, and a variety of modifications that are within the technical scope of the present invention will be apparent to those skilled in the art.

### (1) Modification 1

In this modification, unlike in the above-described embodiment, gateway 3 adds only mobile station data stored in mobile station database to HTTP data that is necessary. For example, in a service in which server 5 requires only a telephone number of mobile station 2, gateway 3 adds only telephone number data of mobile station 2 to HTTP data transmitted from mobile station 2 to server 5, and does not add its IP address, base station ID, or other data. Similarly, in a service in which server 5 requires only a line speed of mobile station 2, gateway 3 adds only line speed data of mobile station 2 to the HTTP data. In actuality, mobile station 2 adds a request for addition of mobile station data indicating a kind of mobile station data to be transmitted to server 5.

Therefore, in this embodiment of the present invention, unnecessary transmission to server 5 of, for example, a telephone number is prevented, thereby enhancing information security in the data communication system.

### (2) Modification 2

In this embodiment, gateway 3 adds to HTTP data only mobile station data that is requested to be added by mobile station 2, of HTTP data transmitted from mobile station 2 to server 5. For example, if HTTP data is concerns only a general informative matter it is not necessary to identify the source of the data, and addition of the data is not required. Moreover, if the mobile station data includes personal information, it is preferable not to transmit such data to server 5. Thus, in this embodiment, only necessary mobile station data added to HTTP data. Concretely, mobile station 2 adds an expansion header indicating a request for addition of mobile station data to transmitted HTTP data when it is necessary for mobile station 2 to transmit HTTP data to server 5 to which mobile station data has been added. Thus, CPU 30 in gateway 3 adds mobile station data to HTTP data only in a case that a request for addition of mobile station data is added.

### (3) Modification 3

In this embodiment, gateway 3 adds mobile station data to HTTP data only in a case that a predetermined condition is satisfied. For example, if a condition for addition of mobile station data is "the first transmitted HTTP data after establishing communication route", mobile station data of mobile station 2 is added to only first data transmitted from mobile station 2 to server 5, after a communication route is established between mobile station 2and server 5, and mobile station data is not added to HTTP data subsequently transmitted via the same communication route. If the condition for addition of mobile station data is "when mobile station data is changed", mobile station data is added to HTTP data transmitted from mobile station 2 in which mobile station data is changed only when mobile station data is changed in mobile station database at gateway 3. Likewise, conditions for addition of mobile station data may be varied as follows: "when the power of radio wave decreases below predetermined level"; "when the service area in which the mobile station exists is changed"; or "periodically with a certain time interval". Such a condition is provided as a parameter in operation program.

### (4) Modification 4

In this embodiment, gateway 3 stores a variety of kinds of administration data processed as NWMP data, as well as mobile station data such as a telephone number of mobile station 2, an ID of base station 11 connecting to mobile station 2, line speed, and communication data volume at mobile station 2. Gateway 3 can add such data as administration data to HTTP data. Other data that can be added to HTTP data includes data of propagation delay in data transmitted by mobile station 2, data of electric field intensity of radio wave emitted by mobile station 2, and so on. In actuality, data content can be freely changed.

### (5) Modification 5

In this embodiment, when gateway 3 adds mobile station data of mobile station 2 to HTTP data transmitted from mobile station 2 the identification data does not include an IP address of mobile station 2. Alternatively, HTTP data of a mobile station 2 and mobile station data in a mobile station database can be matched by using a Media Access Control (MAC) address allocated to mobile station 2.

### (6) Modification 6

In this embodiment, if mobile station data has already been added to HTTP data transmitted from mobile station 2, gateway 3 does not delete the HTTP data and reads correct mobile station data from mobile station database, and then replaces any pre-added mobile station data with read mobile station data. If mobile station data has already been added to HTTP data transmitted from mobile station 2 and it is not necessary to transmit mobile station data to server 5, gateway 3 deletes the mobile station data from the HTTP data, and then transmits the HTTP data to server 5. It is to be noted in this case that a TCP connection between mobile station 2 and gateway 3 is maintained.

### (7) Modification 7

In this embodiment, any protocol other than NWMP can be used for transmitting and receiving administration data of a communication network in a mobile packet communication network. Further, any kind of protocol other than HTTP can be used for transmitting and receiving user data in mobile packet communication network 1 and wired communication network 4. Further, Gateway 3 can add mobile station data on appropriate location of transmitted and received data in response to data format conforming to the used protocol.

### (8) Modification 8

In this embodiment, a sector ID of an area in which mobile station 2 exists is recorded as location data for mobile station 2. Sector ID is a unit corresponding to a reachable range of a carrier wave transmitted from base station 11 divided by a directivity of the carrier wave. Sector ID allows a location of a mobile station 2 in the range of base station 11 to be measured with precision. In the data system of this embodiment, by adding sector ID to HTTP data, gateway 3 can provide an information service on the basis of the user's present or modified position.

### (9) Modification 9

In this embodiment, mobile station 2 utilizes a Global Positioning System (GPS), and mobile packet communication network 1 comprises a server which functions to receive location data of mobile station 2 and record the location data. The GPS server transmits location data of mobile station 2 periodically. By using such location data, it is possible to more precisely measure a location of mobile station 2, as opposed to using a sector ID as described in the embodiment above.

When gateway 3 receives location data of mobile station 2 from the GPS server, gateway 3 records the received location data in mobile station database and adds the received location data to HTTP data transmitted from mobile station 2 to server 5.

### (10) Modification 10

In this embodiment, at gateway 3 a variety of storage devices may be used, such as CD-ROM drive, Magneto Optical (MO) drive, and so on. CPU 30 reads a program stored in one such storage medium to perform a variety of operations, such as addition of mobile station data.

### (11) Modification 11

In this embodiment, mobile packet communication network 1 comprises a database server which functions to administer data such as personal information of a user, usage history of mobile station 2, and the like, in a database. A network operator obtains data of a mobile station 2 from a database server. Such information may include personal information submitted by a user of mobile station 2 in subscribing to the service or information obtained by questionnaire, as opposed to administration data administered by a switching center. Gateway 3 obtains such data from a database as required, and adds the obtained data to HTTP data transmitted from mobile station 2 to server 5 in the same way is for data obtained from switching server 12. Thus, data types administered by the database server can be freely changed. A data communication system of this embodiment is able to provide a greater variety of services, such as marketing services, by utilizing statistical data about sites to which mobile station 2 has connected.

## Claims

1. A communication system, comprising:
a plurality of mobile stations (2) served by a mobile communication network (1);
a communication apparatus (5) served by said mobile communication network (1) or another communication network (4) ;
a data relay apparatus (3) which is connected to said mobile communication network (1) and relays data transmitted between at least one of said plurality of mobile stations (2) and said communication apparatus (5) ;
wherein said data relay apparatus (3) comprises:
storage means (34) for storing a plurality of sets of mobile station data, each set of said plurality of sets of mobile station data corresponding to identification data of a respective one of said plurality of mobile stations (2) used when said respective one of said plurality of mobile stations (2) connects to said mobile communication network (1);
user data receiving means (38) for receiving user data to be transmitted to said communication apparatus from one of said plurality of mobile stations;
extracting means (30) for extracting a set of mobile station data corresponding to said identification data of said one of said plurality of mobile stations (2) from said plurality of sets of mobile station data;
adding means (30) for adding all or a part of said set of mobile station data extracted by said extracting means to said user data; and
transmitting means (33) for transmitting said user data to which said all or a part of said set of mobile station data is added by said adding means to said communication apparatus.

2. A data relay apparatus (3) connected to a mobile communication network, comprising:
storage means (34) for storing a plurality of sets of mobile station data, each set of said plurality of sets of mobile station data corresponding to identification data of a respective one of a plurality of mobile stations served by said mobile communication network (1), said identification data being used when said respective one of said plurality of mobile stations connects to said mobile communication network;
user data receiving means (33) for receiving user data to be transmitted to a communication apparatus served by said mobile communication network or another communication network from one of said plurality of mobile stations;
extracting means (32) for extracting a set of mobile station data corresponding to said identification data of said one of said plurality of mobile stations (2) from said plurality of sets of mobile station data;
adding means (30) for adding all or a part of said set of mobile station data extracted by said extracting means to said user data; and
transmitting means (33) for transmitting said user data to which said all or a part of said set of mobile station data is added by said adding means, to said communication apparatus.

3. A data relay apparatus according to claim 2, wherein said identification data is a telephone number of said respective one of said plurality of mobile stations (2).

4. A data relay apparatus according to claim 2, further comprising:
means (30) for allocating an IP address to said identification data of each of said plurality of mobile stations for identifying said plurality of mobile stations in establishing a connection with said communication apparatus;
wherein said storage means (34) stores said plurality of sets of mobile station data such that each of said plurality of sets of mobile station data is associated with said IP address of a corresponding one of said plurality of mobile stations; and
wherein said extracting means extracts a set of mobile station data corresponding to said one of said plurality of mobile stations identified by said IP address.

5. A data relay apparatus according to claim 2, further comprising:
determining means (39) for determining whether a specific kind of data corresponding to said one of said plurality of mobile stations (2) is added to user data prior to said user data being received by said user data receiving means (33);
wherein said transmitting means (33) transmits user data to which all or a part of said set of mobile station data is added by said adding means (30), to said communication apparatus (5), when said determining means (30) determines that said specific kind of data corresponding to said one of said plurality of mobile stations (2) is not added to user data prior to said user data being received by said user data receiving means (33).

6. A data relay apparatus according to claim 2, further comprising:
determining means (30) for determining whether a specific kind of data corresponding to said one of said plurality of mobile stations (2) is added to user data prior to said user data being received by said user data receiving means (33);
disconnecting means (30) for disconnecting a communication connection established with said communication apparatus (5) by said transmitting means (33), for transmission of user data, when said determining means (30) determines that said specific kind of data corresponding to said one of said plurality of mobile stations (2) is added to user data prior to said user data being received by said user data receiving means (33).

7. A data relay apparatus according to claim 2, further comprising:
determining means (30) for determining whether a specific kind of data corresponding to said one of said plurality of mobile stations (2) is added to user data prior to said user data being received by said user data receiving means;
deleting means (30) for deleting said specific kind of data from user data added when said determining means (30) determines that said specific kind of data corresponding to said one of said plurality of mobile stations (2) is added to user data prior to said user data being received by said user data receiving means (33).

8. A data relay apparatus according to claim 2, further comprising:
determining means (30) for determining whether user data received by said receiving means satisfy a predetermined condition;
wherein said adding means (38) adds all or a part of said set of mobile station data to said user data when said determining means (30) determines user data received by said receiving means (33) satisfies said predetermined condition.

9. A data relay apparatus according to claim 2, wherein said set of mobile station data extracted by said extracting means comprises data corresponding to at least one of a telephone number, an IP address, a mobile station model, a location, a line speed, a propagation delay of data, and an electric field intensity of a radio wave emitted by said one of said plurality of mobile stations.

10. A data relay apparatus according to claim 2, wherein said user data conforms to HTTP, and said adding means adds all or a part of said set of mobile station data extracted by said extracting means to said user data as an expansion header.

11. A method for relaying data by a data relay apparatus (3) connected to a mobile communication network (1), comprising the steps of:
storing a plurality of sets of mobile station data, each set of said plurality of sets of mobile station data corresponding to an identification data of a respective one of a plurality of mobile stations (2) served by said mobile communication network (1), said identification data being used when said respective one of said plurality of mobile stations (2) connects to said mobile communication network (1);
receiving user data to be transmitted to a communication apparatus (5) served by said mobile communication network (1) or another communication network (4) from one of said plurality of mobile stations (2);
extracting a set of mobile station data corresponding to said identification data of said one of said plurality of mobile stations (2) from said plurality of sets of mobile station data stored in said storage step;
adding all or a part of said set of mobile station data extracted by said extracting step to said user data; and
transmitting said user data to which said all or a part of said set of mobile station data is added by said adding step to said communication apparatus (5).

12. A program comprising computer executable instructions, which when executed by a computer connected to a mobile communication network (1), cause said computer to carry out the following steps:
storing a plurality of sets of mobile station data, each set of said plurality of sets of mobile station data corresponding to an identification data of a respective one of a plurality of mobile stations (2) served by said mobile communication network (1), said identification data being used when said respective one of said plurality of mobile stations (2) connects to said mobile communication network (1);
receiving user data to be transmitted to a communication apparatus (5) served by said mobile communication network (1) or another communication network (4) from one of said plurality of mobile stations (2);
extracting a set of mobile station data corresponding to said identification data of said one of said plurality of mobile station (2) from said plurality of sets of mobile station data;
adding extracted all or a part of said set of mobile station data to said user data; and
transmitting said user data to which said all or a part of said set of mobile station data is added to said communication apparatus (5).

13. A storage medium for storing a program comprising computer executable instructions, which when executed by a computer connected to a mobile communication network (1), cause said computer to carry out the following steps:
storing a plurality of sets of mobile station data, each set of said plurality of sets of mobile station data corresponding to an identification data of a respective one of a plurality of mobile stations (2) served by said mobile communication network (1), said identification data being used when said respective one of said plurality of mobile stations (2) connects to said mobile communication network (1);
receiving user data to be transmitted to communication apparatus (5) served by said mobile communication network (1) or another communication network (4) from one of said plurality of mobile stations (2);
extracting a set of mobile station data corresponding to said identification data of said one of said plurality of mobile stations (2) from said plurality of sets of mobile station data;
adding extracted all or a part of said set of mobile station data to said user data; and
transmitting said user data to which said all or a part of said set of mobile station data is added to said communication apparatus (5).

## Patentansprüche

1. Kommunikationssystem, umfassend:
eine Vielzahl von Mobilstationen (2), die durch ein Mobilkommunikationsnetz (1) bedient werden;
eine Kommunikationsvorrichtung (5), die durch das Mobilkommunikationsnetz (1) ein anderes Kommunikationsnetz (4) bedient wird;
eine Datenweiterleitungsvorrichtung (3), welche zu dem Mobilkommunikationsnetz (1) verbunden ist und Daten, die zwischen mindestens einem der Vielzahl von Mobilstationen (2) und der Kommunikationsvorrichtung (5) übertragen werden, weiterleitet;
wobei die Datenweiterleitungsvorrichtung (3) umfasst:
Speichermittel (34) zum Speichern einer Vielzahl von Sätzen von Mobilstationsdaten, wobei jeder Satz der Vielzahl von Sätzen von Mobilstationsdaten Identifikationsdaten von einer jeweiligen der Vielzahl von Mobilstationen (2) entspricht, verwendet wenn die jeweilige der Vielzahl von Mobilstationen (2) zu dem Mobilkommunikationsnetz (1) verbindet;
Benutzerdaten-Empfangsmittel (38) zum Empfangen von zu der Kommunikationsvorrichtung zu übertragenden Benutzerdaten von einer der Vielzahl von Mobilstationen;
Extrahierungsmittel (30) zum Extrahieren eines Satzes von Mobilstationsdaten entsprechend den Identifikationsdaten der einen der Vielzahl von Mobilstationen (2) aus der Vielzahl von Sätzen von Mobilstationsdaten;
Hinzufügemittel (30) zum Hinzufügen alles oder eines Teils des Satzes von Mobilstationsdaten, die durch das Extrahierungsmittel extrahiert werden, zu den Benutzerdaten;
Übertragungsmittel (33) zum Übertragen von Benutzerdaten zu welchen das alles Teil des Satzes von Mobilstationsdaten hinzugefügt wurde durch das Hinzufügemittel, zu der Kommunikationsvorrichtung.

2. Datenweiterleitungsvorrichtung (3), verbunden zu einem Kommunikationsnetz, umfassend:
Speichermittel (34) zum Speichern einer Vielzahl von Sätzen von Mobilstationsdaten, wobei jeder der Vielzahl von Sätzen von Mobilstationsdaten die Identifikationsdaten einer jeweiligen einer Vielzahl von Mobilstationen entspricht, die durch das Mobilkommunikationsnetz (1) bedient werden, wobei die Identifikationsdaten verwendet werden, wenn die jeweilige der Vielzahl von Mobilstationen zu dem Mobilkommunikationsnetz verbindet;
Benutzerdaten-Empfangsmittel (33) zum Empfangen von Benutzerdaten, die zu einer Kommunikationsvorrichtung zu übertragen sind, die durch das Mobilkommunikationsnetz oder ein anderes Mobilkommunikationsnetz bedient werden, von einem der Vielzahl von Mobilstationen;
Extrahierungsmittel (32) zum Extrahieren eines Satzes von Mobilstationsdaten entsprechend den Identifikationsdaten der einen der Vielzahl von Mobilstationen (2) von der Vielzahl von Sätzen von Mobilstationsdaten;
Hinzufügemittel (30) zum Hinzufügen alles oder eines Teils des Satzes von Mobilstationsdaten, die durch das Extrahierungsmittel extrahiert werden, zu den Benutzerdaten;
Übertragungsmittel (33) zum Übertragen der Benutzerdaten, zu welchen das alles oder ein Teil von dem Satz von Mobilstationsdaten durch das Hinzufügemittel hinzugefügt wurde, zu der Kommunikationsvorrichtung.

3. Datenweiterleitungsvorrichtung nach Anspruch 2, wobei die Identifikationsdaten eine Telefonnummer der jeweiligen der Vielzahl von Mobilstationen (2) ist.

4. Datenweiterleitungsvorrichtung nach Anspruch 2, ferner umfassend:
Mittel (30) zum Zuweisen einer IP-Adresse zu den Identifikationsdaten von jeder der Vielzahl von Mobilstationen zum Identifizieren der Vielzahl von Mobilstationen beim Herstellen einer Verbindung mit der Kommunikationsvorrichtung;
wobei das Speichermittel (34) die Vielzahl von Sätzen von Mobilstationsdaten speichert, so dass jede der Vielzahl von Sätzen von Mobilstationsdaten mit der IP-Adresse einer entsprechenden der Vielzahl von Mobilstationen assoziiert ist; und
wobei das Extrahierungsmittel ein Satz von Mobilstationsdaten entsprechend der einen der Vielzahl von Mobilstationen identifiziert durch die IP-Adresse, extrahiert.

5. Datenweiterleitungsvorrichtung nach Anspruch 2, ferner umfassend:
Bestimmungsmittel (39) zum Bestimmen, ob eine bestimmte Art von Daten entsprechend der einen der Vielzahl von Mobilstationen (2) zu Benutzerdaten hinzugefügt wird, bevor die Benutzerdaten durch das Benutzerdaten-Empfangsmittel (33) empfangen werden;
wobei das Übertragungsmittel (33) Benutzerdaten überträgt zu welchen alles oder ein Teil des Satzes von Mobilstationsdaten durch das Hinzufügemittel (30) hinzugefügt wird, zu der Kommunikationsvorrichtung (5),
wenn das Bestimmungsmittel (30) bestimmt, dass die bestimmte Art von Daten, entsprechend der einen der Vielzahl von Mobilstationen (2), nicht zu Benutzerdaten hinzugefügt wurde, bevor die Benutzerdaten durch das Benutzerdaten-Empfangsmittel (33) empfangen werden.

6. Datenweiterleitungsvorrichtung nach Anspruch 2, ferner umfassend:
Bestimmungsmittel (30) zum Bestimmen, ob eine bestimmte Art von Daten entsprechend der einen der Vielzahl von Mobilstationen (2) zu Benutzerdaten hinzugefügt wird, bevor die Benutzerdaten durch das Benutzerdaten-Empfangsmittel (33) empfangen werden;
Trennmittel (30) zum Trennen einer Kommunikationsverbindung, die mit der Kommunikationsvorrichtung (5) durch das Übertragungsmittel (33) hergestellt wurde, zum Übertragen von Benutzerdaten, wenn das Bestimmungsmittel (30) bestimmt, dass die bestimmte Art von Daten, entsprechend der einen der Vielzahl von Mobilstationen (2), zu Benutzerdaten hinzugefügt wurde, bevor die Benutzerdaten durch das Benutzerdaten-Empfangsmittel (33) empfangen werden.

7. Datenweiterleitungsvorrichtung nach Anspruch 2, ferner umfassend:
Bestimmungsmittel (30) zum Bestimmen, ob eine bestimmte Art von Daten, entsprechend der einen der Vielzahl von Mobilstationen (2), zu Benutzerdaten hinzugefügt wird, bevor die Benutzerdaten durch das Benutzerdaten-Empfangsmittel empfangen werden;
Löschmittel (30) zum Löschen der bestimmten Art von Daten von hinzugefügten Daten, wenn das Bestimmungsmittel (30) bestimmt, dass die bestimmte Art von Daten entsprechend der einen der Vielzahl von Mobilstationen (2) zu Benutzerdaten hinzugefügt wird, bevor die Benutzerdaten durch das Benutzerdaten-Empfangsmittel (33) empfangen werden.

8. Datenweiterleitungsvorrichtung nach Anspruch 2, ferner umfassend:
Bestimmungsmittel (30) zum Bestimmen, ob Benutzerdaten, die durch das Empfangsmittel empfangen werden, eine vorbestimmte Bedingung erfüllen;
wobei das Hinzufügemittel (38) alles oder einen Teil von dem Satz von Mobilstationsdaten zu den Benutzerdaten hinzufügt, wenn das Bestimmungsmittel (30) bestimmt, dass Benutzerdaten, die durch das Empfangsmittel (33) empfangen werden, die vorbestimmte Bedingung erfüllen.

9. Datenweiterleitungsvorrichtung nach Anspruch 2, wobei der Satz von Mobilstationsdaten, der durch das Extrahierungsmittel extrahiert wird, Daten umfasst entsprechend mindestens einem von einer Telefonnummer, einer IP-Adresse, einem Mobilstationsmodell, einem Ort, einer Leitungsgeschwindigkeit, einer Laufzeitverzögerung von Daten, und einer Intensität eines elektrischen Felds einer Funkwelle, die durch die eine der Vielzahl von Mobilstationen abgestrahlt wird.

10. Datenweiterleitungsvorrichtung nach Anspruch 2, wobei die Benutzerdaten HTTP genügen und das Hinzufügemittel alles oder einen Teil von dem Satz von Mobilstationsdaten, die durch das Extrahierungsmittel extrahiert werden, zu den Benutzerdaten als ein Erweiterungs-Header hinzufügt.

11. Verfahren zum Weiterleiten von Daten durch eine Datenweiterleitungsvorrichtung (3), die zu einem Mobilkommunikationsnetz (1) verbunden ist, die Schritte umfassend:
Speichern einer Vielzahl von Sätzen von Mobilstationsdaten, wobei jeder Satz der Vielzahl von Sätzen von Mobilstationsdaten Identifikationsdaten einer jeweiligen der Vielzahl von Mobilstationen (2) entspricht, die durch das Mobilkommunikationsnetz (1) bedient werden, wobei die Identifikationsdaten verwendet werden, wenn die jeweilige der Vielzahl von Mobilstationen (2) zu dem Mobilkommunikationsnetz (1) verbindet;
Empfangen von Benutzerdaten, die zu einer Kommunikationsvorrichtung (5) zu übertragen sind, die durch das Mobilkommunikationsnetz (1) oder ein anderes Kommunikationsnetz (4) bedient wird, von einer der Vielzahl von Mobilstationen (2);
Extrahieren eines Satzes von Mobilstationsdaten, entsprechend den Identifikationsdaten der einen der Vielzahl von Mobilstationen (2), von der Vielzahl von Sätzen von Mobilstationsdaten, die in dem Speicherschritt gespeichert werden;
Hinzufügen alles oder eines Teils von dem Satz von Mobilstationsdaten, die den Extrahierungsschritt extrahiert werden, zu den Benutzerdaten; und
Übertragen der Benutzerdaten, zu welchem das alles oder ein Teil des Satzes von Mobilstationsdaten in dem Hinzufügeschritt hinzugefügt wurde, zu der Kommunikationsvorrichtung (5).

12. Programm, umfassend Computer-ausführbare Befehle, welche, wenn sie durch einen Computer ausgeführt werden, der zu einem Mobilkommunikationsnetz (1) verbunden ist, den Computer veranlasst, die folgenden Schritte auszuführen:
Speichern einer Vielzahl von Sätzen von Mobilstationsdaten, wobei jeder Satz der Vielzahl von Sätzen von Mobilstationsdaten Identifikationsdaten einer jeweiligen der Vielzahl von Mobilstationen (2) entspricht, die durch das Mobilkommunikationsnetz (1) bedient werden, wobei die Identifikationsdaten verwendet werden, wenn die jeweilige der Vielzahl von Mobilstationen (2) zu dem Mobilkommunikationsnetz (1) verbindet;
Empfangen von Benutzerdaten, die zu einer Kommunikationsvorrichtung (5) zu übertragen sind, die durch das Mobilkommunikationsnetz (1) oder ein anderes Kommunikationsnetz (4) bedient wird, von einer der Vielzahl von Mobilstationen (2);
Extrahieren eines Satzes von Mobilstationsdaten, entsprechend den Identifikationsdaten der einen der Vielzahl von Mobilstationen (2), von der Vielzahl von Sätzen von Mobilstationsdaten;
Hinzufügen von extrahiertem alles oder eines Teils von dem Satz von Mobilstationsdaten zu den Benutzerdaten; und
Übertragen der Benutzerdaten, zu welchem das alles oder ein Teil des Satzes von Mobilstationsdaten hinzugefügt wurde, zu der Kommunikationsvorrichtung (5).

13. Computermedium zum Speichern eines Programms, das Computer-ausführbare Befehle umfasst, welche, wenn sie durch einen Computer ausgeführt werden, der zu einem Mobilkommunikationsnetz (1) verbunden ist, verursacht, den Computer veranlasst die folgenden Schritte auszuführen:
Speichern einer Vielzahl von Sätzen von Mobilstationsdaten, wobei jeder Satz der Vielzahl von Sätzen von Mobilstationsdaten Identifikationsdaten einer jeweiligen der Vielzahl von Mobilstationen (2) entspricht, die durch das Mobilkommunikationsnetz (1) bedient werden, wobei die Identifikationsdaten verwendet werden, wenn die jeweilige der Vielzahl von Mobilstationen (2) zu dem Mobilkommunikationsnetz (1) verbindet;
Empfangen von Benutzerdaten, die zu einer Kommunikationsvorrichtung (5) zu übertragen sind, die durch das Mobilkommunikationsnetz (1) oder ein anderes Kommunikationsnetz (4) bedient wird, von einer der Vielzahl von Mobilstationen (2);
Extrahieren eines Satzes von Mobilstationsdaten, entsprechend den Identifikationsdaten der einen der Vielzahl von Mobilstationen (2), von der Vielzahl von Sätzen von Mobilstationsdaten;
Hinzufügen von extrahiertem alles oder eines Teils von dem Satz von Mobilstationsdaten zu den Benutzerdaten; und
Übertragen der Benutzerdaten, zu welchem das alles oder ein Teil des Satzes von Mobilstationsdaten hinzugefügt wurde, zu der Kommunikationsvorrichtung (5).

## Revendications

1. Système de communication, comprenant :
une pluralité de stations mobiles (2) desservies par un réseau de communication mobile (1) ;
un dispositif de communication (5) desservi par ledit réseau de communication mobile (1) ou par un autre réseau de communication (4) ;
un dispositif relais de transmission de données (3) qui est connecté audit réseau de communication mobile (1) et retransmet les données transmises entre au moins l'une des stations mobiles de ladite pluralité de stations mobiles (2) et ledit dispositif de communication (5) ;
dans lequel ledit dispositif relais de transmission de données (3) comprend :
un moyen de stockage (34) pour stocker une pluralité d'ensembles de données de station mobile, chaque ensemble de ladite pluralité d'ensembles de données de station mobile correspondant à des données d'identification d'une station mobile respective de ladite pluralité de stations mobiles (2) utilisées lorsque ladite station mobile respective de ladite pluralité de stations mobiles (2) est connectée audit réseau de communication mobile (1) ;
un moyen de réception de données d'utilisateur (38) pour recevoir des données d'utilisateur devant être transmises audit dispositif de communication depuis une station mobile de ladite pluralité de stations mobiles ;
un moyen d'extraction (30) pour extraire un ensemble de données de station mobile correspondant auxdites données d'identification de ladite une station mobile de ladite pluralité de stations mobiles (2) de ladite pluralité d'ensembles de données de station mobile ;
un moyen d'addition (30) pour ajouter tout ou partie dudit ensemble de données de station mobile extrait par ledit moyen d'extraction auxdites données d'utilisateur ; et
un moyen de transmission (33) pour transmettre lesdites données d'utilisateur auxquelles ledit tout ou partie dudit ensemble de données de station mobile est ajouté par ledit moyen d'addition audit dispositif de communication.

2. Dispositif relais de transmission de données (3) connecté à un réseau de communication mobile, comprenant :
un moyen de stockage (34) pour stocker une pluralité d'ensembles de données de station mobile, chaque ensemble de ladite pluralité d'ensembles de données de station mobile correspondant à des données d'identification d'une station mobile respective d'une pluralité de stations mobiles desservies par ledit réseau de communication mobile (1), lesdites données d'identification étant utilisées lorsque ladite station mobile respective de ladite pluralité de stations mobiles est connectée audit réseau de communication mobile ;
un moyen de réception de données d'utilisateur (33) pour recevoir des données d'utilisateur devant être transmises à un dispositif de communication desservi par ledit réseau de communication mobile ou par un autre réseau de communication depuis une station mobile de ladite pluralité de stations mobiles ;
un moyen d'extraction (32) pour extraire un ensemble de données de station mobile correspondant auxdites données d'identification de ladite une station mobile de ladite pluralité de stations mobiles (2) de ladite pluralité d'ensembles de données de station mobile ;
un moyen d'addition (30) pour ajouter tout ou partie dudit ensemble de données de station mobile extrait par ledit moyen d'extraction auxdites données d'utilisateur ; et
un moyen de transmission (33) pour transmettre lesdites données d'utilisateur auxquelles ledit tout ou partie dudit ensemble de données de station mobile est ajouté par ledit moyen d'addition audit dispositif de communication.

3. Dispositif relais de transmission de données selon la revendication 2, dans lequel lesdites données d'identification sont un numéro de téléphone de ladite station mobile respective de ladite pluralité de stations mobiles (2).

4. Dispositif relais de transmission de données selon la revendication 2, comprenant en outre :
un moyen (30) pour attribuer une adresse IP auxdites données d'identification de chaque station mobile de ladite pluralité de stations mobiles pour identifier ladite pluralité de stations mobiles en établissant une connexion avec ledit dispositif de communication ;
dans lequel ledit moyen de stockage (34) stocke ladite pluralité d'ensembles de données de station mobile de sorte que chaque ensemble de ladite pluralité d'ensembles de données de station mobile soit associé à ladite adresse IP d'une station mobile correspondante de ladite pluralité de stations mobiles ; et
dans lequel ledit moyen d'extraction extrait un ensemble de données de station mobile correspondant à ladite une station mobile de ladite pluralité de stations mobiles identifiée par ladite adresse IP.

5. Dispositif relais de transmission de données selon la revendication 2, comprenant en outre :
un moyen de détermination (39) pour déterminer si un type spécifique de données correspondant à ladite une station mobile de ladite pluralité de stations mobiles (2) est ajouté aux données d'utilisateur avant que lesdites données d'utilisateur soient reçues par ledit moyen de réception de données d'utilisateur (33) ;
dans lequel ledit moyen de transmission (38) pour transmettre des données d'utilisateur, auxquelles tout ou partie dudit ensemble de données de station mobile est ajouté par ledit moyen d'addition (30), audit dispositif de communication (5), lorsque ledit moyen de détermination (30) détermine que ledit type spécifique de données correspondant à ladite une station mobile de ladite pluralité de stations mobiles (2) n'est pas ajouté aux données d'utilisateur avant que lesdites données d'utilisateur soient reçues par ledit moyen de réception de données d'utilisateur (33).

6. Dispositif relais de transmission de données selon la revendication 2, comprenant en outre :
un moyen de détermination (30) pour déterminer si un type spécifique de données correspondant à ladite une station mobile de ladite pluralité de stations mobiles (2) est ajouté aux données d'utilisateur avant que lesdites données d'utilisateur soient reçues par ledit moyen de réception de données d'utilisateur (33) ;
un moyen de déconnexion (30) pour déconnecter une connexion de communication établie avec ledit dispositif de communication (5) par ledit moyen de transmission (33), pour la transmission des données d'utilisateur,
lorsque ledit moyen de détermination (30) détermine que ledit type spécifique de données correspondant à ladite une station mobile de ladite pluralité de stations mobiles (2) est ajouté aux données d'utilisateur avant que lesdites données d'utilisateur soient reçues par ledit moyen de réception de données d'utilisateur (33).

7. Dispositif relais de transmission de données selon la revendication 2, comprenant en outre :
un moyen de détermination (30) pour déterminer si un type spécifique de données correspondant à ladite une station mobile de ladite pluralité de stations mobiles (2) est ajouté aux données d'utilisateur avant que lesdites données d'utilisateur soient reçues par ledit moyen de réception de données d'utilisateur ;
un moyen de suppression (30) pour supprimer ledit type spécifique de données des données d'utilisateur ajouté quand ledit moyen de détermination (30) détermine que ledit type spécifique de données correspondant à ladite une station mobile de ladite pluralité de stations mobiles (2) est ajouté aux données d'utilisateur avant que lesdites données d'utilisateur soient reçues par ledit moyen de réception de données d'utilisateur (33).

8. Dispositif relais de transmission de données selon la revendication 2, comprenant en outre :
un moyen de détermination (30) pour déterminer des données d'utilisateur reçues par ledit moyen de réception satisfont à une condition prédéterminée ;
dans lequel ledit moyen d'addition (38) ajoute tout ou partie dudit ensemble de données de station mobile auxdites données d'utilisateur quand ledit moyen de détermination (30) détermine que les données d'utilisateur reçues par ledit moyen de réception (33) satisfont à ladite condition prédéterminée.

9. Dispositif relais de transmission de données selon la revendication 2, dans lequel ledit ensemble de données de station mobile extrait par ledit moyen d'extraction comprend des données correspondant au moins à un numéro de téléphone, une adresse IP, un modèle de station mobile, un emplacement, une vitesse de ligne, un temps de propagation des données, ou à une intensité de champ électrique d'une onde radioélectrique émise par ladite une station mobile de ladite pluralité de stations mobiles.

10. Dispositif relais de transmission de données selon la revendication 2, dans lequel lesdites données d'utilisateur sont conformes au protocole http, et ledit moyen d'addition ajoute tout ou partie dudit ensemble de données de station mobile extrait par ledit moyen d'extraction auxdites données d'utilisateur comme en-tête d'expansion.

11. Procédé pour relayer des données au moyen d'un dispositif relais de transmission de données (3) connecté à un réseau de communication mobile (1), comprenant les étapes consistant à :
stocker une pluralité d'ensembles de données de station mobile, chaque ensemble de ladite pluralité d'ensembles de données de station mobile correspondant à des données d'identification d'une station mobile respective d'une pluralité de stations mobiles (2) desservie par ledit réseau de communication mobile (1), lesdites données d'identification étant utilisées lorsque ladite station mobile respective de ladite pluralité de stations mobiles (2) est connectée audit réseau de communication mobile (1) ;
recevoir des données d'utilisateur devant être transmises à un dispositif de communication (5) desservi par ledit réseau de communication mobile (1) ou
par un autre réseau de communication (4) depuis une station mobile de ladite pluralité de stations mobiles (2) ;
extraire un ensemble de données de station mobile correspondant auxdites données d'identification de ladite une station mobile de ladite pluralité de stations mobiles (2) de ladite pluralité d'ensembles de données de station mobile stockés lors de ladite étape de stockage ;
ajouter tout ou partie dudit ensemble de données de station mobile extrait lors de ladite étape d'extraction auxdites données d'utilisateur ; et
transmettre lesdites données d'utilisateur auxquelles ledit tout ou partie dudit ensemble de données de station mobile est ajouté lors de ladite étape d'addition audit dispositif de communication (5).

12. Programme comprenant des instructions exécutables par un ordinateur, qui lorsqu'elles sont exécutées par un ordinateur connecté à un réseau de communication mobile (1), obligent ledit ordinateur à exécuter les étapes suivantes consistant à :
stocker une pluralité d'ensembles de données de station mobile, chaque ensemble de ladite pluralité d'ensembles de données de station mobile correspondant à des données d'identification d'une station mobile respective d'une pluralité de stations mobiles (2) desservie par ledit réseau de communication mobile (1), lesdites données d'identification étant utilisées lorsque ladite station mobile respective de ladite pluralité de stations mobiles (2) est connectée audit réseau de communication mobile (1) ;
recevoir des données d'utilisateur devant être transmises à un dispositif de communication (5) desservi par ledit réseau de communication mobile (1) ou par un autre réseau de communication (4) depuis une station mobile de ladite pluralité de stations mobiles (2) ;
extraire un ensemble de données de station mobile correspondant auxdites données d'identification de ladite une station mobile de ladite pluralité de stations mobiles (2) de ladite pluralité d'ensembles de données de station mobile ;
ajouter tout ou partie dudit ensemble de données de station mobile extrait auxdites données d'utilisateur ; et
transmettre lesdites données d'utilisateur auxquelles ledit tout ou partie dudit ensemble de données de station mobile est ajouté audit dispositif de communication (5).

13. Support de stockage pour stocker un programme comprenant des instructions exécutables par un ordinateur, qui lorsqu'elles sont exécutées par un ordinateur connecté à un réseau de communication mobile (1), obligent ledit ordinateur à exécuter les étapes suivantes consistant à :
stocker une pluralité d'ensembles de données de station mobile, chaque ensemble de ladite pluralité d'ensembles de données de station mobile correspondant à des données d'identification d'une station mobile respective d'une pluralité de stations mobiles (2) desservie par ledit réseau de communication mobile (1), lesdites données d'identification étant utilisées lorsque ladite station mobile respective de ladite pluralité de stations mobiles (2) est connectée audit réseau de communication mobile (1) ;
recevoir des données d'utilisateur devant être transmises à un dispositif de communication (5) desservi par ledit réseau de communication mobile (1) ou
par un autre réseau de communication (4) depuis une station mobile de ladite pluralité de stations mobiles (2) ;
extraire un ensemble de données de station mobile correspondant auxdites données d'identification de ladite une station mobile de ladite pluralité de stations mobiles (2) de ladite pluralité d'ensembles de données de station mobile ;
ajouter tout ou partie dudit ensemble de données de station mobile extrait auxdites données d'utilisateur ; et
transmettre lesdites données d'utilisateur auxquelles ledit tout ou partie dudit ensemble de données de station mobile est ajouté audit dispositif de communication (5).
